# EUROPÄISCHE PATENTSCHRIFT

(11) **EP 2 334 605 B1**
(45) Veröffentlichungstag und Bekanntmachung des Hinweises auf die Patenterteilung: **10.12.2014**
(21) Anmeldenummer: 09744058.0
(22) Anmeldetag: 07.10.2009
(51) Int. Cl.: C02F 1/38, C02F 1/78, B01F 3/04, B01F 7/00, B04B 5/10, C02F 103/00, C02F 103/20, C02F 101/30, B04B 11/06, B01F 7/22, B03B 5/32, B04B 1/00, B04B 3/00

(54) **REINIGUNGS- UND STOFFTRENNVORRICHTUNG FÜR ABWÄSSER, INSBESONDERE AUS DER NUTZTIERHALTUNG**
CLEANING AND MATERIAL SEPARATING DEVICE FOR WASTEWATER, PARTICULARLY FROM LIVESTOCK HUSBANDRY
DISPOSITIF DE PURIFICATION ET DE SÉPARATION DE MATIÈRES DESTINÉ AUX EAUX USÉES, ISSUES EN PARTICULIER DE L EXPLOITATION DU BÉTAIL

(30) Priorität: 07.10.2008 DE 102008050223
(43) Veröffentlichungstag der Anmeldung: 22.06.2011
(73) Patentinhaber: Entwicklungsges. Frank Mohr U. Gerhard Krüger, jun. Gbr, 25715 Eddelak (DE)
(72) Erfinder: MOHR, Frank, 25715 Eddelak (DE); KRÜGER, Gerhard, 20257 Hamburg (DE)
(74) Vertreter: Scholz, Hartmut
(86) Internationale Anmeldenummer: PCT/EP2009/007300
(87) Internationale Veröffentlichungsnummer: WO 2010/040563

(56) Entgegenhaltungen:
- EP-A- 1 433 754
- EP-A2- 0 166 582
- EP-A2- 0 176 943
- WO-A-91/12209
- WO-A-2005/035128
- WO-A-2005/061396
- WO-A-2005/065389
- WO-A-2006/104759
- WO-A-2008/063992
- DE-A1- 3 904 151
- DE-B- 1 143 761
- GB-A- 1 221 022
- US-A1- 2007 290 380
- US-B1- 6 216 875
- US-B1- 6 460 830

## Beschreibung

Die Erfindung betrifft eine Vorrichtung zum Reinigen von Schwebstoffe enthaltenden flüssigen Medien, mit einem geschlossenen Ozonisierungsbehälter, in dem ein koaxial verlaufender hohlzylindrischer Einbau angeordnet ist, in dem Einbau eine mit Rührmitteln versehene, drehbare Rührwerkswelle (16) verläuft, und dem Einbau Ozonzuleitungen zugeordnet sind.

Mit Fäkalien aus der Nutztierhaltung versetzte Abwässer, nämlich Gülle, wird üblicherweise in Lagertanks gesammelt und nach dem Abernten auf landwirtschaftliche Nutzflächen als natürlicher Dünger ausgebracht. Dabei entsteht für die Umgebung eine erhebliche Geruchsbelästigung.

Eine derartige Abwassersammlung erfolgt auch an Bord von Schiffen. Insbesondere an Bord von großen Seeschiffen, insbesondere Kreuzfahrtschiffen, fällt eine beträchtlich Abwassermenge an, die nicht einfach über Bord entsorgt werden kann und darf. Entsprechend großer Tanklageraum muss deshalb vorgehalten werden.

Aus der DE2920010A1 ist es bekannt, Verunreinigungen in Grund- und Oberflächenwässern mittels Ozon zu beseitigen. Hierbei werden Abwässer mit natürlichen oder aus Produktionsprozessen der chemischen Industrie abfallenden Verunreinigungen gereinigt.

Ein in der DE1960953A1 beschriebenes Verfahren zum Kondensieren und Gefrieren von Wasserdampf aus einem Gasgemisch findet in Anordnungen Verwendung, die zum Ausfällen eines bestimmten Bestandteiles, z.B. Schwefeldioxid, aus einem Gasgemisch dienen, in denen das kalte Restgas zum Wärmeaustausch mit zugeführtem heißen und nicht aufbereitetem Gas verwendet wird und das Gasgemisch vor Eintreten in den Kondensator relativ frei von Wasser sein soll. Aus der DE2025523A1 ist bekannt, titrimetrische Messungen zum Überwachen und Regeln von chemischen Behandlungsbädern durchzuführen.

Aus der Zeitschrift "Wasser, Luft und Betrieb", 19 (1975) Nr. 4, S. 147-152 ist es bekannt, zur Wasser- und Luftbehandlung Ozon zu verwenden. Aus der DE1062394B1 ist ein Verfahren und eine Vorrichtung zum Geruchfreimachen von Luft, insbesondere industriellen Abgasen mittels Ozon bekannt, die in Kern aus einem Einleitungsrohr mit einer Venturidüse besteht. Die verunreinigte Luft wird über das Einleitungsrohr mit Ozon in einer Mischeinrichtung vermengt, wobei das Ozon durch einen an der Venturidüse des Einleitungsrohres entstehenden Unterdruck aus einem Ozonisator angesaugt wird.

Aus der US 4430306 ist eine Vorrichtung zum Rückgewinnen von Sauerstoff nach Ozonierungsreaktionen bekannt. Zu diesem Zweck wird bei einer Ozonierungsreaktion nicht verbrauchtes O₂ einem Trockenturm zugeleitet, in dem Unreinheiten wie Wasser, organische Verunreinigungen und CO₂ an Zeolithen adsorbiert werden. Der gereinigte Sauerstoff wird dem Ozonisator zur Erhöhung der Ozonausbeute wieder zugeführt.

Aus der GB 1427614C1 sind ein Verfahren und eine Vorrichtung bekannt, mit dessen Hilfe verunreinigte, insbesondere faulige Luft durch Einwirkung von Ozon gereinigt werden kann. Dazu wird ozongesättigte, feuchte Luft und feinste ozongesättigte Wassertröpfchen in die verunreinigten Gase eingeblasen, wobei der Ozongehalt jederzeit gemessen und reguliert werden kann.

Aus der US 2007/0290380 ist ein geschlossener, zylindrischer Behälter bekannt, in dem an einer in einem Zylinder geführten Welle angeordnete Rührmittel angeordnet sind. Diese Rührmittel erzeugen eine Strömung, die nicht durch den Zylinder geführt wird, so dass eine Durchmischung mit Ozon zufällig und nicht gesteuert erfolgt.

Schließlich ist aus der DE 1143761B1 ein geschlossener, zylindrischer Behälter mit einem als stufenförmiger Klassierraum ausgebildeten Rotorkegel zur Trennung von Sanden und bergbaulichen aus Trüben bekannt. Dazu werden die Trüben oben in den Klassierraum eingeleitet, in dem sie von einem Rotor in Drehbewegung versetzt und in Gegenstromwasser radial nach außen geschleudert wird. Dabei klettert sie an der gekrümmten Behälterwand hoch, und die enthaltenen, unterschiedlich schweren, körnigen Inhalte werden Stufe für Stufe in radial außen angebrachten Auffangkegeln aufgefangen. Die körnigen Inhalte werden dabei in Abhängigkeit von ihrem Gewicht nach oben gespült und nach ihrer Wichte getrennt.

All diese Verfahren und Vorrichtungen dienen der Trennung von festen Inhalten aus Wässern oder der Beseitigung von Geruchsbelästigungen durch verunreinigte Abwässer. Die verunreinigten Abwässer müssen dazu aber in relativ großen Tankbehältern zwischengelagert werden und der Ozonverbrauch ist relativ hoch. Dies erfordert einen erheblichen Stauraum, der gerade auf Schiffen nicht in unbegrenztem Maße zur Verfügung steht. Darüber hinaus sind sie nicht geeignet, die Verursacher aus den Abwässern kostengünstig zu beseitigen und den erforderlichen Zwischenlagerraum so klein wie möglich zu halten.

Aufgabe der Erfindung ist es, eine Vorrichtung zu schaffen, bei der Verunreinigungen aus flüssigen Medien entfernt, der Ozonverbrauch minimiert und die Geruchsbelästigungen verursachenden Schwebstoffe kostengünstig beseitigt werden können.

Diese Aufgabe wird durch die in dem Anspruch 1 angegebenen Merkmale gelöst, insbesondere dadurch, dass an der Rührwerkswelle beidendig Rührwerksmittel so angeordnet sind, dass sie in dem Einbau eine in Einbaulage von oben nach unten gerichtete Strömung erzeugen, und dem hohlzylindrischen Einbau in Einbaulage unten eine mit einer mit radial nach innen gerichteten Düsen versehene Ringleitung zugeordnet ist, durch die über die Ozonzuleitung Ozon gegen die Strömung einblasbar ist, und dem Ozonisierungsbehälter ein kegelstumpfförmiger Stofftrennbehälter nachgeordnete ist, der radial außen Fangtaschen aufweist, die mit Sieben versehen sind, in den das zuvor in dem Ozonisierungsbehälter ozonisierte Medium umpump- und zentrifugierbar ist.

Bei einer vorteilhaften Ausführung ist der Ozonisierungsbehälter kugelförmig ausgebildet, und bei einer weiteren vorteilhaften Ausführung sind die radial außen angeordneten Fangtaschen des kegelstumpfförmig ausgebildeten Stofftrennbehälters im Bereich seines in Einbaulage oben liegenden großen Durchmessers mit Grobsieben und im Bereich seines in Einbaulage unten liegenden kleinen Durchmessers mit Feinsieben versehen, die gemäß einer weiteren vorteilhaften Ausführung als diskontinuierlich zu öffnende Entleerungsklappen ausgebildet sind.

Durch diese Maßnahmen wird in dem Ozonisierungsbehälter ein Strömungskreislauf erzeugt, der mittig vertikal von oben nach unten und radial außen umgekehrt von unten nach oben verläuft. Die Abwässer werden permanent in Bewegung gehalten und größere Festbestandteile können sich nicht absetzten. Dadurch wird sichergestellt, dass die Abwässer mit dem Ozon intensiv in Wirkverbindung treten und eine effektive Durchlüftung mit dem Gas gewährleistet ist.

Es werden besonders feine Ozonblasen erzeugt, wobei die Blasengröße auf die durchschnittlich zu erwartende Größe der Schwebeteilchen abgestimmt werden kann. Die Reaktionsoberfläche der Abwässer nimmt zu, was eine Verkürzung der Einwirkdauer des Ozons und damit eine Prozessverkürzung ermöglicht. Das in diese Strömung eingeblasene Ozon wird gut durchmischt und das zu klärende Abwasser erfährt eine intensive Reinigung. Danach wird es in die Trennvorrichtung geleitet, in der die verbliebenen, unterschiedlich großen Festbestandteile abgetrennt werden können.

Die erfindungsgemäße Vorrichtung kann somit besonders effektiv und Kosten sparend Geruchsbelästigende Bestandteile aus Abwässern neutralisieren und abtrennen.

Alternativ wird die zu lösende Aufgabe durch die in dem Anspruch 2 angegebenen Merkmale gelöst.

Bei dieser zweiter, alternativen Ausführung der Erfindung ist in dem Ozonisierungsbehälter eine mit radial nach innen gerichteten Düsen versehene Ringleitung angeordnet ist, durch die über die Ozonzuleitung Ozon in das zu reinigenden Medium einblasbar ist, und an der Rührwerkswelle ein Stator mit einem Rotorraum angeordnet ist, in dem ein schnell drehender, so hohe Scherkräfte erzeugender Rotor angeordnet ist, dass er in dem zu reinigenden Medium enthaltende unterschiedlich große und verklumpte Schwebstoffinseln auflöst und gleichmäßig vermischt, und dem Ozonisierungsbehälter ein kegelstumpfförmiger Stofftrennbehälter nachgeordnete ist, der radial außen Fangtaschen aufweist, die mit Sieben versehen sind, in den das gleichmäßig vermischte und ozonisierte Medium umpump- und zentrifugierbar ist.

Mit dieser Ausführung werden relativ hohe Scherkräfte erzeugt, mit denen in dem zu reinigenden Medium enthaltende Schwebstoffklumpen aufgeschlossen und das Abwasser homogenisiert werden kann. Auch wird sichergestellt, dass schwere Festbestandteile in der Abwässersuspension gehalten werden und nicht verklumpen, sich absetzten und der Ozoneinwirkung entziehen können.

In dem Stofftrennbehälter sind die zuvor mit Ozon behandelten Abwässer zentrifugierbar, wobei die gröberen, schwereren Schwebstoffe durch die Kegelstumpfform weiter nach außen geschleudert und so von den leichteren, kleineren Schwebstoffe separiert werden können. Er ist dazu erfindungsgemäß radial außen mit Fangtaschen versehen, die im Bereich seines in Einbaulage oben liegenden großen Durchmessers mit Grobsieben und im Bereich seines in Einbaulage unten liegenden kleinen Durchmessers mit Feinsieben versehen sind. Die Siebe der Fangtaschen sind als diskontinuierlich zu öffnenden Entleerungsklappen ausgebildet. Das restliche, nunmehr gereinigte Abwasser kann problemlos entsorgt werden.

Die Schwebstoff-Fangtaschen sind als nach unten zuöffnenden Entleerungsklappen ausgebildet. Die ausgeflockten, separierten Schwebstoffe können hier diskontinuierlich ausgetragen und Platz sparend zwischengelagert werden. Das Volumen der Schwebstoffe, die bis zur fachgerechten Entsorgung zwischengelagert werden müssen, kann somit wesentlich verringert werden.

Die Erfindung wird im Folgenden anhand von beispielhaften Ausführungsformen unter Bezugnahme auf die beigefügte Zeichnung näher erläutert; es zeigen:
- **Figur 1**: einen erfindungsgemäßen, kugelförmigen, geschlossenen Ozonisierungsbehälter, mit einem vertikal verlaufenden, beidseitig offenen, hohlzylindrischen Einbau, durch den eine drehbare Rührwerkswelle verläuft, der beidendig ein Rührwerkspropeller zugeordnet ist;
- **Figur 2**: einen erfindungsgemäßen, kugelförmigen, geschlossenen Ozonisierungsbehälter gemäß Figur 1, mit einem vertikal verlaufenden, beidseitig offenen, hohlzylindrischen Einbau, in dem ein Rührwerk angeordnet ist, das einen in einem Stator schnell laufenden Rotor aufweist;
- **Figur 3**: einen geschlossenen, kegelstumpfförmigen Stofftrennbehälter, in den die zuvor in dem kugelförmigen Ozonisierungsbehälter mit Ozon behandelten Abwässer umgepumpt und zentrifugiert werden können, wobei die ausgeflockten Schwebstoffe nach außen in Fangtaschen geschleudert und hier aufgefangen werden;
- **Figur 4**: einen halb kegelstumpfförmigen und halb zylindrischen Stofftrennbehälter, in den die zuvor in dem kugelförmigen Ozonisierungsbehälter mit Ozon behandelten Abwässer umgepumpt und zentrifugiert werden können, wobei die ausgeflockten Schwebstoffe radial nach außen an die Behälterwandung geschleudert werden, wo sie sich absetzen und mittels einer Förderschnecke ausgetragen werden können.

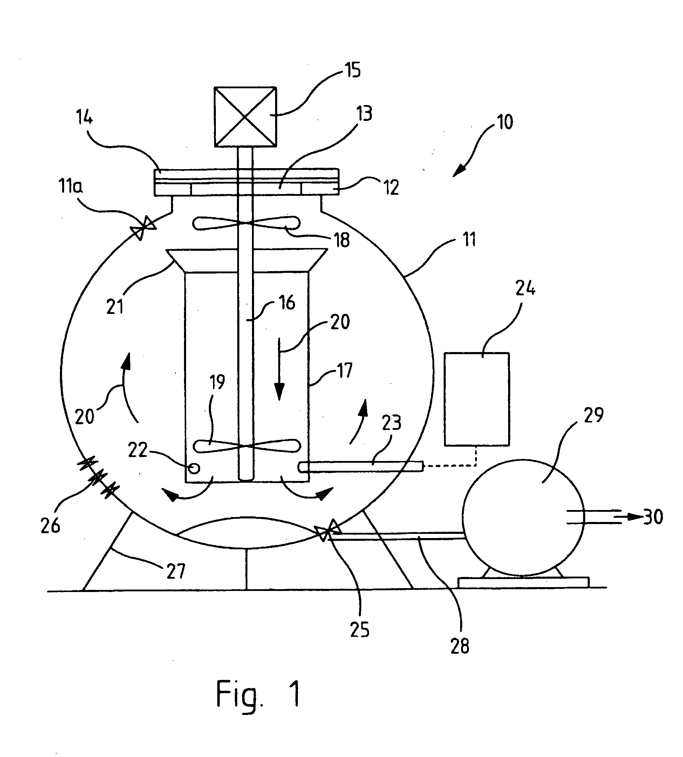

Die in der Figur 1 dargestellte erfindungsgemäße Reinigungsvorrichtung 10 besteht aus einem vorzugsweise kugelförmigen Ozonisierungsbehälter 11. Der Ozonisierungsbehälter 11 kann über ein Einlassventil 11a mit einem zu reinigenden Abwasser, beispielsweise Gülle aus der Landwirtschaft oder mit Fäkalien belastetem Brauchwasser, befüllt werden. Er ist vorzugsweise kugelförmig ausgebildet, um ein optimales Verhältnis zwischen Oberfläche und Volumen zu gewährleisten.

Der kugelförmige Ozonisierungsbehälter 11 ist in Einbaulage oben mit einem Vorschweißflansch 12 versehen, der ein Mannloch 13 aufweist. Durch das Mannloch 13 kann der Ozonisierungsbehälter 11 erforderlichenfalls befahren werden.

Das Mannloch 13 kann nach außen mit einem Blindflansch 14 verschlossen werden. Auf dem Blindflansch 14 ist ein Rührwerksantrieb 15, beispielsweise ein Elektromotor, angebracht. Mit dem Rührwerksantrieb 15 kann eine Rührwerkswelle 16 angetrieben werden, die in Einbaulage senkrecht durch einen hohlzylindrischen Einbau 17 in dem kugelförmigen Ozonisierungsbehälter 11 verläuft.

Der hohlzylindrische Einbau 17 ist in Einbaulage oben mit einem oberen Rührwerkspropeller 18 und in Einbaulage unten mit einem unteren Rührwerkspropeller 19 versehen. Mit den Rührwerkpropellern 18 und 19 wird in dem hohlzylindrischen Einbau 17 eine von oben nach unten verlaufende Strömung 20 des zureinigenden Abwassers erzeugt. Zur Unterstützung der Strömung 20 weist der hohlzylindrische Einbau 17 an seinem oberen Rand einen Trichtereinsatz 21 auf.

In Einbaulage unten ist der hohlzylindrische Einbau 17 mit einer Ringleitung 22 versehen, durch die über nicht näher dargestellte Düsen Ozon radial nach innen gerichtet eingeblasen werden kann. Das Ozon gelangt durch eine Ozonzuleitung 23 von einer externen Ozonerzeugung 24 in die Ringleitung 22 und wird hier gegen die Strömung 20 eingeblasen. Dadurch kommt es zu einer optimalen Durchmischung des zureinigenden Abwassers mit dem Ozon. Zur Entnahme von Proben sind Kontrollanschlussstutzen 26 vorgehen.

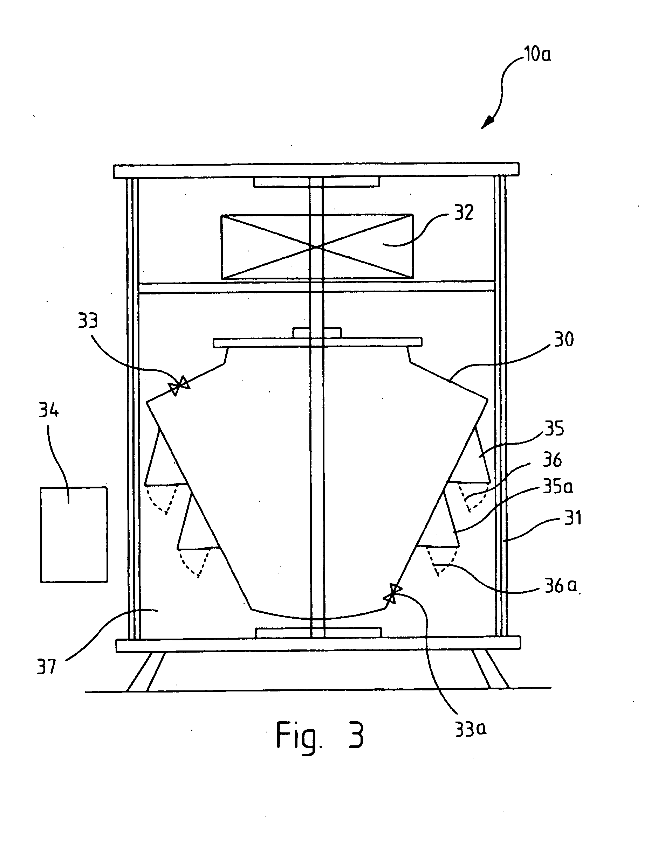

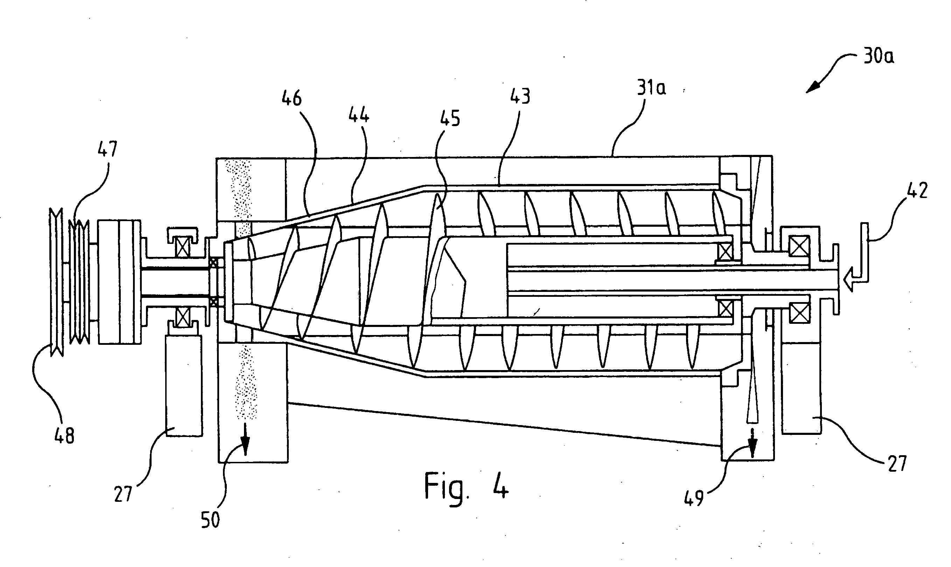

Der kugelförmige Ozonisierungsbehälter 11 ruht auf Behälterlagerungen 27 und ist zur Entleerung mit einem Entleerungsanschlussstutzen 25 versehen. Nach erfolgter Ozonisierung, bei der die Verunreinigungen neutralisiert und als Schwebstoffe ausgeflockt worden sind, kann das zu reinigende Abwasser über eine Umpumpleitung 28 aus dem kugelförmigen Ozonisierungsbehälter 11 mittels einer Umfüllpumpe 29 abgepumpt und in eine Stofftrennvorrichtung 10a oder 30a weiter geleitet werden, wie sie unten in den Figuren 3 und 4 dargestellt sind.

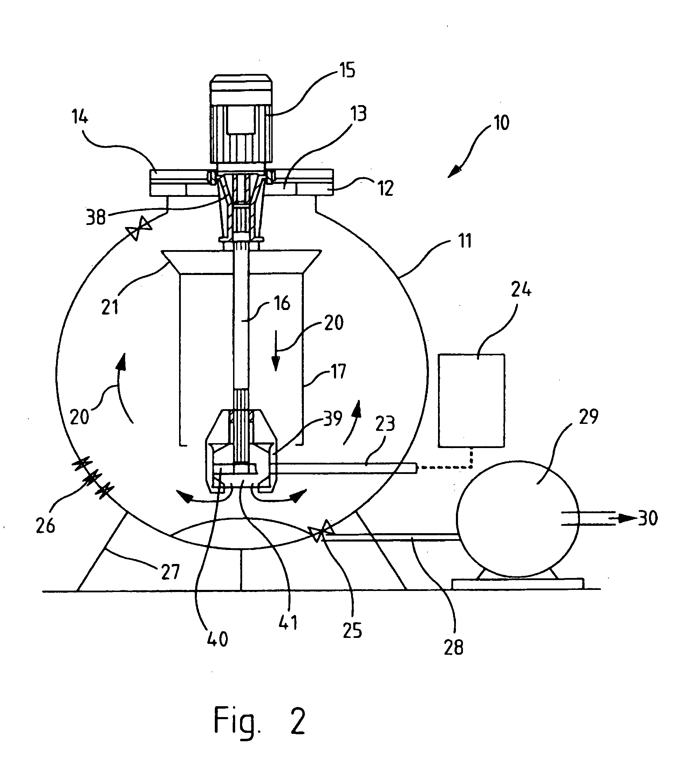

Bei der Ausführung gemäß der Figur 2 ist in dem Ozonisierungsbehälter 11 am unteren Ende der Rührwerkswelle 16 ein Stator 39 vorgesehen. In dem Stator 39 ist ein sehr schnell drehender Rotor 40 angeordnet. Die Rührwerkswelle 16 ist dazu an ihrem oberen Ende in einem Lagerflansch 38 gelagert und wird von einem Rührwerksantrieb 15 in Form eines Elektromotors angetrieben.

Der Stator 39 ist mit einem unten offenen Rotorraum 41 versehen, in den Ozonzuleitung 23 mündet. Das zu reinigende Medium, nämlich Abwasser oder Gülle aus der Landwirtschaft, ist kein homogener Stoff und kann unterschiedlich große und feste verklumpte Schwebstoffinseln enthalten, die möglicherweise gar nicht oder nur unzureichend mit dem Ozon in Reaktion treten.

Das zu reinigende Medium wird deshalb mittels des sich in dem Stator 39 schnell drehenden Rotors 40 homogenisiert und gleichzeitig das Ozon durch die Ozonzuleitung 23 eintragen. Der Rotor 40 dreht dabei mit Drehzahlen von ca. 250 und 500 Umdrehungen, wobei so hohe Scherkräfte auftreten, dass die Feststoffinseln aufgelöst und gleichmäßig vermischt werden.

Die in der Figur 3 dargestellte Stoff trennvorrichtung 10a besteht im Wesentlichen aus einem stehend aufgestellten Stofftrennbehälter 30, der in einem stehenden Gehäuse 31 angeordnet ist. Der Stofftrennbehälter 30 ist erfindungsgemäß kegelstumpfförmig ausgebildet, wobei der größere Kegelstumpfdurchmesser sich in Einbaulage oben befindet. Er ist mit einem Schleuderantrieb 32 versehen und weist ein Einlassventil 33 auf, durch den das von der Reinigungsvorrichtung 10 gemäß Figur 1 kommende, zu reinigende und bereits ozonisierte Medium eingeleitete werden kann.

Nach der Befüllung wird das ozonisierte Abwasser mit Hilfe des Schleuderantriebs 32 in eine rasche Drehbewegung versetzt. Mittels einer externen Messstation 34 können sämtliche Arbeitsabläufe in dem Stofftrennbehälter 30 überwacht werden.

Durch die Drehbewegung werden die ausgeflockten Schwebstoffe radial nach außen geschleudert, wo sie in Fangtaschen 35 bzw. 35a aufgefangen und gesammelt werden. Die Fangtaschen 35 bzw. 35a sind rundum auf dem gesamten Umfang des kegelstumpfförmigen Stofftrennbehälters 30 verteilt angeordnet. Dabei befinden sich die Fangtaschen 35 oben im Bereich des größeren Durchmessers und sind mit Grobsieben 36 versehen. Die größeren, weil schwereren Schwebstoffe werden beim Zentrifugieren zuerst und weiter nach außen gefördert, wobei sie sich den oberen Fangtaschen 35 im Bereich des größeren Durchmessers sammeln.

Die kleineren und leichteren Schwebstoffe werden weniger weit nach außen gefördert und sammeln sich in den Fangtaschen 35a, die darunter im Bereich des kleineren Durchmessers vorgesehen sind. Die unteren Fangtaschen 35a sind dabei mit Feinsieben 36a versehen. Durch die erfindungsgemäß kegelstumpfförmige Ausgestaltung des Stofftrennbehälters 30 wird so eine Fraktionierung der ausgeflockten Schwebstoffe erzielt.

Nachdem sämtliche Schwebstoffe aus dem nunmehr gereinigten Abwasser entfernt sind, kann es durch ein Ablassventil 33a entsorgt und beispielsweise dem Reinigungskreislauf wieder zugeführt werden.

Das so gereinigte Abwasser kann aber auch einer weiteren Wasseraufbereitung zugeführt werden, in der es soweit gereinigt und desinfiziert wird, dass es beispielsweise auf einem Schiff wieder als Brauch- und/oder Trinkwasser verwendet werden kann.

Die in Fangtaschen 35 und 35a aufgefangenen und gesammelten Schwebstoffe können beispielsweise in einen in dem Gehäuse 31 vorgesehenen Stauraum 37 entleert und bis zur endgültigen Entsorgung zwischengelagert werden. Zum Entleeren der Fangtaschen 35 und 35a sind die Grobsiebe 36 und die Feinsiebe 36a als Entleerungsklappen ausgebildet und können diskontinuierlich geöffnet werden. Die so gesammelten Feststoffe können einer nicht dargestellten Verbrennungsanlage zugeführt und dort entsorgt werden.

Die in der Figur 4 dargestellte bekannte Stofftrennvorrichtung 30a besteht im Wesentlichen aus einem liegend angeordneten Gehäuse 31a, das mit einem Einlassventil 42 für das zu reinigende Medium versehen ist. In dem liegend angeordneten Gehäuse 31a befindet sich eine Aufnahmetrommel 46, die drehbar auf einer Behälterlagerung 27 ruht. Sie besteht aus einem zylindrischen Trommelteil 43 und einem konischen Trommelteil 44.

Im Bereich des zylindrischen Trommelteils 43 ist ein Einlaufventil 42 vorgesehen. Der zylindrische Trommelteil geht einstückig in den konischen Trommelteil 44 über.

In der Aufnahmetrommel 46 ist eine Förderschnecke 45 angeordnet, die mit der Innenoberfläche des konischen Trommelteils 44 in Wirkverbindung steht. Die Aufnahmetrommel 46 kann über einen Trommelantrieb 47, beispielsweise mittels eines nicht dargestellten Elektromotors, in eine rasche Drehbewegung versetzt werden. Die für die Stofftrennung wesentliche Drehgeschwindigkeit kann dabei mittels eines Regelungsantriebs 48 variiert werden.

Nach erfolgter Stofftrennung kann die Flüssigkeit über ein Ablassventil 49 abgelassen werden. Die aus dem zu reinigenden Medium separierten, relativ trockenen, festen Schwebstoffe können über einen Feststoffaustrag 50 ausgetragen werden.

### Bezugszeichen

- 10: Reinigungsvorrichtung
- 10a: Stofftrennvorrichtung
- 11: kugelförmiger Ozonisierungsbehälter
- 11a: Einlassventil
- 12: Vorschweißflansch
- 13: Mannloch
- 14: Blindflansch
- 15: Rührwerksantrieb
- 16: Rührwerkswelle
- 17: hohlzylindrischer Einbau
- 18: Rührwerkspropeller, oben
- 19: Rührwerkspropeller, unten
- 20: Strömung
- 21: Trichtereinsatz
- 22: Ringleitung
- 23: Ozonzuleitung
- 24: Ozonerzeugung
- 25: Entleerungsanschlussstutzen
- 26: Kontrollanschlussstutzen
- 27: Behälterlagerung
- 28: Umpumpleitung
- 29: Umfüllpumpe
- 30: Stofftrennbehälter, stehend
- 30a: Stofftrennbehälter, liegend
- 31: stehendes Gehäuse
- 31a: liegendes Gehäuse
- 32: Schleuderantrieb
- 33: Einlassventil
- 33a: Auslassventil
- 34: Messstation
- 35: Obere Fangtasche
- 35a: untere Fangtasche
- 36: Grobsieb
- 36a: Feinsieb
- 37: Stauraum
- 38: Lagerflansch
- 39: Stator
- 40: Rotor
- 41: Rotorraum
- 42: Einlassventil
- 43: zylindrischer Trommelteil
- 44: konischer Trommelteil
- 45: Förderschnecke
- 46: Aufnahmetrommel
- 47: Trommelantrieb
- 48: Regelungsantrieb
- 49: Ablassventil
- 50: Feststoffaustrag

## Patentansprüche

1. Vorrichtung zum Reinigen von Schwebstoffe enthaltenden flüssigen Medien, mit einem geschlossenen Ozonisierungsbehälter (11), in dem ein koaxial verlaufender hohlzylindrischer Einbau (17) angeordnet ist, in dem Einbau (17) eine mit Rührmitteln (18, 19) versehene, drehbare Rührwerkswelle (16) verläuft, und dem Einbau (17) Ozonzuleitungen (22, 23) zugeordnet sind, **dadurch gekennzeichnet, dass** an der Rührwerkswelle (16) beidendig Rührwerksmittel (18, 19) so angeordnet sind, dass sie in dem Einbau (17) eine in Einbaulage von oben nach unten gerichtete Strömung (20) erzeugen, und dem hohlzylindrischen Einbau (17) in Einbaulage unten eine mit einer mit radial nach innen gerichteten Düsen versehene Ringleitung (22) zugeordnet ist, durch die über die Ozonzuleitung (23) Ozon gegen die Strömung (20) einblasbar ist, und dem Ozonisierungsbehälter (11) ein kegelstumpfförmiger Stofftrennbehälter (30) nachgeordnete ist, der radial außen Fangtaschen (35, 35a) aufweist, die mit Sieben (36, 36a) versehen sind, in den das zuvor in dem Ozonisierungsbehälter (11) ozonisierte Medium umpump- und zentrifugierbar ist.

2. Vorrichtung zum Reinigen von Schwebstoffe enthaltenden flüssigen Medien, mit einem geschlossenen Ozonisierungsbehälter (11), in dem ein koaxial verlaufender hohlzylindrischer Einbau (17) angeordnet ist, in dem Einbau (17) eine mit Rührmitteln (18, 19) versehene, drehbare Rührwerkswelle (16) verläuft, und dem Einbau (17) Ozonzuleitungen (22, 23) zugeordnet sind, **dadurch gekennzeichnet, dass** in dem Ozonisierungsbehälter (11) eine mit radial nach innen gerichteten Düsen versehene Ringleitung (22) angeordnet ist, durch die über die Ozonzuleitung (23) Ozon in das zu reinigenden Medium einblasbar ist, und an der Rührwerkswelle (16) ein Stator (39) mit einem Rotorraum (41) angeordnet ist, in dem ein schnell drehender, so hohe Scherkräfte erzeugender Rotor (40) angeordnet ist, dass er in dem zu reinigenden Medium enthaltende unterschiedlich große und verklumpte Schwebstoffinseln auflöst und gleichmäßig vermischt, und dem Ozonisierungsbehälter (11) ein kegelstumpfförmiger Stofftrennbehälter (30) nachgeordnete ist, der radial außen Fangtaschen (35, 35a) aufweist, die mit Sieben (36, 36a) versehen sind, in den das gleichmäßig vermischte und ozonisierte Medium umpump- und zentrifugierbar ist.

3. Vorrichtung zum Reinigen von Schwebstoffe enthaltenden flüssigen Medien nach Anspruch 2, **dadurch gekennzeichnet, dass** der in dem Rotorraum (41) angeordnete, schnell drehende Rotor (40) mit Drehzahlen von 250 bis 500 Umdrehungen dreht.

4. Vorrichtung zum Reinigen von Schwebstoffe enthaltenden flüssigen Medien nach den Ansprüchen 1 und 2, **dadurch gekennzeichnet, dass** der Ozonisierungsbehälter (11) kugelförmig ausgebildet ist.

5. Vorrichtung zum Reinigen von Schwebstoffe enthaltenden flüssigen Medien nach den Ansprüchen 1 und 2, **dadurch gekennzeichnet, dass** die radial außen angeordneten Fangtaschen (35) des Stofftrennbehälters (30) im Bereich seines in Einbaulage oben liegenden großen Durchmessers mit Grobsieben (36) und im Bereich seines in Einbaulage unten liegenden kleinen Durchmessers mit Feinsieben (36a) versehen sind.

6. Vorrichtung zum Reinigen von Schwebstoffe enthaltenden flüssigen Medien nach Anspruch 5, **dadurch gekennzeichnet, dass** die Siebe (36, 36a) der Fangtaschen (35, 35a) als zu öffnende Entleerungsklappen ausgebildet sind.

## Claims

1. Apparatus for cleaning liquid media bearing suspended particulate matter, said apparatus comprising an enclosed ozonizing vessel (11) having therein a coaxially extending hollow-cylindrical insert assembly (17), with a rotatable agitator shaft (16) mounting stirring means (18, 19) extending through said assembly and assembly (17) having ozone feed lines (22, 23) coupled thereto, **characterized in that** stirring means (18, 19) are mounted on both ends of the agitating shaft (16) in the installed position to generate inside insert assembly (17) a top-to-bottom flow (20), **in that** hollow-cylindrical insert assembly (17) has associated therewith in a bottom position an annular ring conduit (22) having radially inwardly directed nozzles therethrough through which ozone from ozone feed line (23) may be ejected against flow (20), and **in that** there is provided downstream of ozonizing vessel (11) a frustroconical material separating vessel (30) having in radially outer positions collecting pockets (35, 35a) with screens (36, 36a), said separating vessel adapted to receive and centrifuge the media previously ozonized and pumped into ozonizing vessel (11).

2. Apparatus for cleaning liquid media bearing suspended particulate matter, said apparatus comprising a closed ozonizing vessel (11) having therein a coaxially extending hollow-cylindrical insert assembly (17), with a rotatable agitating shaft (16) mounting stirring means (18, 19) extending through said insert assembly and insert assembly (17) having ozone feed lines (22, 23) coupled thereto, **characterized in that** ozonizing vessel (11) has therein an annular ring conduit (22) having radially inwardly directed nozzles therethrough through which ozone from ozone feed line (23) may be ejected into the media to be cleaned, **in that** agitator shaft (16) has thereat a stator (39) with a rotor space (41) housing a rotating rotor (40) which generates shear forces high enough to dissolve and homogeously commingle differently sized, large and clumped-up islands of particulate matter contained in the media to be cleaned, and **in that** a frustroconical material separating vessel (30) is disposed downstream of ozonizing vessel (11) and has radially outer collecting pockets (35, 35a) with screens (36, 36a), said material separating vessel adapted to receive and centrifuge the homogenously commingled and ozonized media pumped thereinto.

3. Apparatus for cleaning liquid media bearing suspended particulate matter as claimed in claim 2, **characterized in that** the high-speed rotor (40) in rotor space (41) rotates at speeds of 250 to 500 r.p.m.

4. Apparatus for cleaning liquid media bearing suspended particulate matter as claimed in claims 1 and 2, **characterized in that** the ozonizing vessel (11) is spherical in shape.

5. Apparatus for cleaning liquid media bearing suspended particulate matter as claimed in claims 1 and 2, **characterized in that** the radially outer collecting pockets (35) of material separating vessel (30) have, when installed, coarse screens in the region of its large diameter in an upper position and fine screens (36a) in the region of its smaller diameter in a lower position.

6. Apparatus for cleaning liquid media bearing suspended particulate matter as claimed in claim 5, **characterized in that** screens (36, 36a) of collecting pockets (35, 35a) are formed to constitute emptying flaps adapted to be opened.

## Revendications

1. Dispositif pour la purification des milieux liquides contenant des matières en suspension, comportant un récipient fermé d'ozonisation (11) dans lequel est agencé une pièce d'insert de cylindre creux (17) s'étendant coaxialement, un arbre d'agitateur tournant (16) pourvu des moyens d'agitation (18, 19) s'étendant dans la pièce d'insert (17), et des amenées d'ozone (22, 23) étant attribuées à la pièce d'insert (17), **caractérisé en ce que** des moyens d'agitation (18, 19) sont agencés aux deux extrémités de l'arbre d'agitateur (16) de manière qu'ils génèrent dans la pièce d'insert (17) un courant (20) du haut en bas dans la position de montage, et qu'une conduite annulaire (22) pourvue des buses dirigées radialement vers l'intérieur est attribuée à la pièce d'insert de cylindre creux (17) dans la position de montage en bas, par laquelle conduite annulaire de l'ozone peut être introduite contre le courant (20) à travers l'amenées d'ozone (23), et un récipient tronconique de séparation de matières (30) est disposé en aval du récipient d'ozonisation (11) comportant radialement à l'extérieur des poches de capture (35, 35a) pourvues des tamis (36, 36a) dans lequel le milieu ozonisé dans le récipient d'ozonisation (11) préalablement est centrifugeable et peut être transvasé à la pompe.

2. Dispositif pour la purification des milieux liquides contenant des matières en suspension, comportant un récipient fermé d'ozonisation (11) dans lequel est agencé une pièce d'insert de cylindre creux (17) s'étendant coaxialement, un arbre d'agitateur tournant (16) pourvu des moyens d'agitation (18, 19) s'étendant dans la pièce d'insert (17), et des amenées d'ozone (22, 23) étant attribuées à la pièce d'insert (17), **caractérisé en ce que** dans le récipient d'ozonisation (11) une conduite annulaire (22) pourvue des buses dirigées radialement vers l'intérieur est disposée, par laquelle de l'ozone peut être introduite dans le milieu à purifier à travers l'amenée d'ozone (23), et un stator (39) avec un volume de rotor (41) est disposé à l'arbre d'agitateur (16) dans lequel est agencé un rotor (40) à rotation rapide qui génère des cisaillements si élevés qu'il dissout et mélange uniformément des îles de matières en suspension de tailles différentes et agglutinées contenues dans le milieu à purifier, et un récipient tronconique de séparation de matières (30) est disposé en aval du récipient d'ozonisation (11) comportant radialement à l'extérieur des poches de capture (35, 35a) pourvues des tamis (36, 36a) dans lequel le milieu mélangé uniformément et ozonisé est centrifugeable et peut être transvasé à la pompe.

3. Dispositif pour la purification des milieux liquides contenant des matières en suspension selon la revendication 2, **caractérisé en ce que** le rotor (40) à rotation rapide disposé dans le volume de rotor (41) tourne avec des nombres de tours de 250 à 500 tours.

4. Dispositif pour la purification des milieux liquides contenant des matières en suspension selon les revendications 1 et 2, **caractérisé en ce que** le récipient d'ozonisation (11) présente une forme sphérique.

5. Dispositif pour la purification des milieux liquides contenant des matières en suspension selon les revendications 1 et 2, **caractérisé en ce que** les poches de capture (35) disposées radialement à l'extérieur du récipient de séparation de matières (30) au niveau de son grand diamètre situé en haut en position de montage sont pourvues des tamis grossiers (36) et au niveau de son petit diamètre situé en bas en position de montage sont pourvues des tamis fins (36a).

6. Dispositif pour la purification des milieux liquides contenant des matières en suspension selon la revendication 5, **caractérisé en ce que** les tamis (36, 36a) des poches de capture (35, 35a) sont formés en tant que des clapets de vidange à ouvrir.
